Europäisches Patentamt

European Patent Office

Office européen des brevets

(19)

(11) Veröffentlichungsnummer: **0 294 591 B1**

(12) **EUROPÄISCHE PATENTSCHRIFT**

(45) Veröffentlichungstag der Patentschrift: **26.02.92**

(51) Int. Cl.⁵: **G01K 11/22**, H02K 11/00

(21) Anmeldenummer: **88107231.8**

(22) Anmeldetag: **05.05.88**

(54) **Integrale Temperaturmessung in elektrischen Maschinen.**

(30) Priorität: **09.06.87 DE 3719207**
**28.01.88 DE 3802529**

(43) Veröffentlichungstag der Anmeldung:
**14.12.88 Patentblatt 88/50**

(45) Bekanntmachung des Hinweises auf die
Patenterteilung:
**26.02.92 Patentblatt 92/09**

(84) Benannte Vertragsstaaten:
**CH DE FR GB IT LI SE**

(56) Entgegenhaltungen:
**EP-A- 0 017 446        FR-A- 1 417 139**
**GB-A- 1 524 025        LU-A- 47 475**
**LU-A- 50 322           SU-A- 1 138 668**

(73) Patentinhaber: **SIEMENS AKTIENGESELL-
SCHAFT
Wittelsbacherplatz 2
W-8000 München 2(DE)**

(72) Erfinder: **Doemens, Günter, Dr.Ing.
Eichenfeldstrasse 4
W-8150 Holzkirchen(DE)**

## Beschreibung

Die Erfindung betrifft die integrale Temperaturmessung in elektrischen Maschinen durch Auswertung der Temperaturabhängigkeit der Ausbreitungsbedingungen von Schall- bzw. Ultraschall in Gasen.

Aus der europäischen Patentanmeldung EP-A1-0017446 ist ein Verfahren zur Messung der Temperatur eines Mediums bekannt, wobei sich beispielsweise die Gastemperatur eines Heißgasstromes durch den Einsatz eines darin applizierten Rohres, das seinerseits mit einem Gas gefüllt ist, ermitteln läßt, indem die von der Temperatur des Gases abhängige Schallausbreitungsgeschwindigkeit innerhalb des Rohres detektiert und ausgewertet wird.

In der französischen Patentschrift FR-A-1.417.139 wird unter Anwendung des gleichen in der obengenannten Druckschrift beschriebenen Meßprinzipes, die integrale Temperaturmessung in einem umschlossenen Raum ermittelt. Hierbei werden mittels eines Senders (E) Schallwellen in den mit einem Gas gefüllten und in dem umschlossenen Raum verlegten Leiter eingebracht. Die Einbringung efolgt an dem einen Ende des Leiters, wobei am anderen Ende des Leiters ein Empfänger (R, R1, R2) die entsprechenden und auszuwertenden Schallwellen aufnimmt.

Bei elektrischen Maschinen stellt die Wicklungstemperatur eine wesentliche Betriebskenngröße dar. Dabei interessiert weniger ein punktueller Temperaturwert, sondern vielmehr eine integrale oder mittlere Temperaturangabe über die gesamte Länge der Wicklung bzw. Wicklungspakete. Eine ständige, automatische Überwachung dieser Kenngröße würde einen entscheidenden Vorteil für die Betriebssicherheit von elektrischen Maschinen darstellen.

Bisher wurde die integrale Temperatur von Ständerwicklungen über eine Widerstandsmessung der Kupferwicklungen durchgeführt. Die Trennung des Leistungsstromkreises und des Meßstromkreises setzt jedoch einen erheblichen schaltungstechnischen Aufwand voraus, so daß ein serienmäßiger Einbau dieses Meßverfahrens in Normmalschinen aus wirtschaftlichen Gründen kaum möglich ist. Für die integrale Temperaturmessung der Läuferwicklung sind keine Meßverfahren bekannt.

Der Erfindung liegt die Aufgabe zugrunde, eine integrale Temperaturmessung für Läuferwicklungen elektrischer Maschinen bereitzustellen. Dies wird erfindungsgemäß durch die Merkmale des Anspruches 1 gelöst. Vorteilhafte Ausgestaltungen und Weiterbildungen der Efindung sind in den Unteransprüchen aufgeführt.

Die Erfindung ermöglicht die Messung der integralen Temperatur innerhalb eines Läufers einer elektrischen Maschine, wobei das offene Ende der dabei verwendeten Kapillare axial am Wellenstumpf der Läuferwelle herausgeführt ist. Dabei sind Schallsender bzw. Schallempfänger und das Ende der Kapillare frei gegeneinander drehbar. Somit kann die integrale Temperatur einer Läuferwicklung von einem einzigen statischen Punkt aus berührungslos gemessen werden. Voraussetzung ist die Zugänglichkeit der Läuferwelle am Wellenstumpf.

Eine wesentliche Randbedingung bei der beschriebenen Temperaturmessung besteht darin, daß durch den Temperatursensor keine zusätzlichen Potentialflächen in den Wicklungen einer elektrischen Maschine entstehen. Das bedeutet, daß keine leitenden oder halbleitenden Materialien in dem Temperatursensor zu verwenden sind. Aus diesem Grund wird zu Herstellung der Kapillare vorzugsweise ein Isoliermaterial, insbesondere Glas, verwendet.

Die Erfindung wird anhand der Figuren an einem Ausführungsbeispiel in der Anwendung auf elektrische Maschinen erläutert. Es Zeigen:

Figur 1   eine schematische Darstellung einer Ständerwicklung mit Glasfaser und Ultraschallsender/Empfänger und

Figur 2   eine Läuferwicklung mit entsprechender Anordnung.

In den Figuren ist mit 1 eine feststehende Wicklung, zum Beispiel eine Ständerwicklung, bezeichnet. Innerhalb eines derartigen Wicklungspakets ist eine biegsame Kapillare, zum Beispiel eine hohle Glasfaser, 2 verlegt. Das offene Ende 3 der Glasfaser geht im Ausführungsbeispiel von einem kombinierten Ultraschallsender/Empfänger 4 aus.

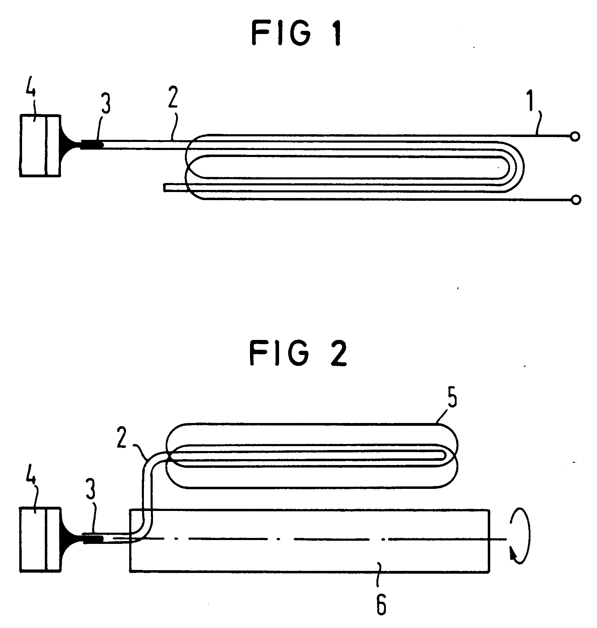

Die Figur 2 unterscheidet sich nur insofern von der Figur 1, daß es sich bei der angedeuteten Wicklung um ein Läuferwicklungspaket 5 handelt, in dem die Glasfaser 2 verlegt ist. Das offene Glasfaserende tritt am Wellenstumpf einer Welle 6 zentrisch aus und umschließt zur Schallein- und Auskopplung frei beweglich den Sender/Empfänger.

In den Figuren ist nicht dargestellt, daß die Kapillare 2 zwischen dem Sender/Empfänger 4 und dem Eintritt in die Meßstrecke mit einem Festkörper gefüllt ist, so daß die Temperaturmessung aus diesem Bereich nicht beeinflußt wird.

Die der Erfindung zugrundeliegende integrale Temperaturmessung bedient sich der Temperaturabhängigkeit der Ausbreitungsgeschwindigkeit c von Ultraschall in Gasen ($c \sim \sqrt{T}$) sowie der Lichtwellenleitertechnologie. Dabei wird ein Schall- bzw. Ultraschallsignal in einer hohlen Glasfaser (Durchmesser außen ca. 0,5 mm, innen ca. 0,3 mm) geführt und die Glasfaser entlang der Wicklungsleiter verlegt. Die Verwendung von Glasfasern gewährleistet eine hohe mechanische Stabilität und Flexibilität sowie gute Temperaturbeständigkeit.

Bei Temperaturänderung entlang der Wicklung erfolgt eine Laufzeitveränderung bzw. Phasenverschiebung des Ultraschallsignales, welche mit einfachen elektronischen Mitteln meßbar ist und über die Beziehung c ~ $\sqrt{T}$ eine direkte, präzise und eindeutige Messung der integralen Wicklungstemperatur ermöglicht.

Zweckmäßigerweise wird die Glasfaser am Ende reflektierend verschlossen und der Schall- bzw. Ultraschallsender zugleich als Empfänger benützt.

Diese Schall- bzw. Ultraschalltechnik eröffnet zugleich das bisher vollkommen ungelöste Problem der integralen Temperaturmessung an rotierenden Läuferwicklungen. Dazu wird die hohle Glasfaser ebenfalls entlang der Läuferwicklung verlegt und das für die Schalleinkopplung vorgesehene Ende axial am Wellenstumpf herausgeführt (Figur 2), wo der feststehende Sender/Empfänger nicht berührend in das Faserende eintaucht bzw. das Faserende frei drehbar den Sender/Empfänger umschließt.

**Patentansprüche**

1. Integrale Temperaturmessung durch die Auswertung der Temperaturabhängigkeit der Ausbreitungsbedingungen von Schall bzw. Ultraschall in Gasen, wobei entlang des Weges, entlang dem die integrale Temperatur zu ermitteln ist, ein Schall- bzw. Ultraschallsignal in einer Kapillare (2) geführt ist und Laufzeitveränderungen bzw. Phasenverschiebungen in Abhängigkeit von der Temperatur ermittelt werden, **dadurch gekennzeichnet,** daß die integrale Temperaturmessung in elektrischen Maschinen an Läuferwicklungen mittels einer entlang von Läuferwicklungen geführten Kapillare (2) erfolgt und die Schallankopplung an einem Ende (3) der Kapillare (2) geschieht, welches axial am Wellenstumpf einer Läuferwelle (6) herausgeführt ist.

2. Integrale Temperaturmessung nach Anspruch 1, **dadurch gekennzeichnet,** daß an den Enden (3) der Kapillare (2) außerhalb des Meßbereiches einerseits ein Schallsender und andererseits ein Schallempfänger angeordnet sind, wobei Schallsender und Schallempfänger über eine Laufzeit - oder Phasenauswerteeinrichtung verbunden sind.

3. Integrale Temperaturmessung nach Anspruch 1, **dadurch gekennzeichnet,** daß die Kapillare (2) an einem Ende reflektierend verschlossen ist, wobei Schallsender und Schallempfänger gleichzeitig am anderen Ende (3) der Kapillare (2) angeordnet sind.

4. Integrale Temperaturmessung nach einem der vorhergehenden Ansprüche, **dadurch gekennzeichnet,** daß das Ende (3) der Kapillare (2) an dem Schallsender bzw. Schallempfänger frei drehbar angekoppelt ist.

5. Integrale Temperaturmessung nach einem der vorhergehenden Ansprüche, **dadurch gekennzeichnet,** daß die Kapillare (2) aus Isoliermaterial besteht.

6. Integrale Temperaturmessung nach Anspruch 5, **dadurch gekennzeichnet,** daß als Isoliermaterial Glas verwendet wird.

7. Integrale Temperaturmessung nach Anspruch 6, **dadurch gekennzeichnet,** daß die Kapillare (2) durch eine Glasfaser dargestellt wird, deren Außendurchmesser ca. 0,5 mm und deren Innendurchmesser ca. 0,3 mm beträgt.

8. Integrale Temperaturmessung nach einem der vorhergehenden Ansprüche, **dadurch gekennzeichnet,** daß die Führung des Schalles bzw. Ultraschalles in der Kapillare (2) bis zum Eintritt in einen auszumessenden Bereich in einem Festkörper erfolgt.

**Claims**

1. Integral temperature measurement by the evaluation of the temperature dependency of the propagation conditions of sound and ultrasound in gases, a sound signal or ultrasound signal being guided in a capillary (2) along the path along which the integral temperature is to be determined, and propagation time changes or phase shifts being determined as a function of the temperature, characterised in that the integral temperature measurement in electrical machines is carried out on rotor windings by means of a capillary (2) guided along by the rotor windings and the sound injection takes place at one end (3) of the capillary (2), which end (3) is guided out coaxially on the shaft stub of a rotor shaft (6).

2. Integral temperature measurement according to Claim 1, characterized in that, on the ends (3) of the capillary (2) outside the measurement region, there is arranged on the one hand a sound transmitter and on the other hand a sound receiver, the sound transmitter and sound receiver being connected via a propagation time or phase evaluation device.

3. Integral temperature measurement according to Claim 1, characterized in that the capillary (2) is reflectively closed at one end, the sound transmitter and sound receiver being arranged at the same time on the other end (3) of the capillary (2).

4. Integral temperature measurement according to one of the preceding claims, characterized in that the end (3) of the capillary (2) is coupled to the sound transmitter or sound receiver such that it can rotate freely.

5. Integral temperature measurement according to one of the preceding claims, characterized in that the capillary (2) consists of insulating material.

6. Integral temperature measurement according to Claim 5, characterized in that glass is used as the insulating material.

7. Integral temperature measurement according to Claim 6, characterized in that the capillary (2) is represented by a glass fibre whose external diameter is approximately 0.5 mm and whose internal diameter is approximately 0.3 mm.

8. Integral temperature measurement according to one of the preceding claims, characterized in that the guidance of the sound or ultrasound in the capillary (2) takes place until entry into a region in a solid body which is to be measured.

**Revendications**

1. Mesure de la température intégrale par exploitation des variations, en fonction de la température, des conditions de propagation du son ou des ultrasons dans des gaz, en faisant passer le long du trajet, le long duquel la température intégrale doit être déterminée, un signal sonore ou ultrasonore dans un tube capillaire (2), et en déterminant les variations de durée de parcours ou les déphasages en fonction de la température, caractérisée en ce que la mesure de la température intégrale, dans des machines électriques, s'effectue au niveau des enroulements rotoriques, au moyen d'un tube capillaire (2) qui s'étend le long des enroulements rotoriques, et le couplage avec le son a lieu à une extrémité (3) du tube capillaire (2) qui dépasse axialement d'un bout arbre du rotor (6).

2. Mesure de la température intégrale suivant la revendication 1, caractérisée en ce qu'aux extrémités (3) du tube capillaire (2) sont disposés, à l'extérieur de la zone de mesure, d'une part un émetteur acoustique et, d'autre part, un récepteur acoustique, l'émetteur acoustique et le récepteur acoustique étant reliés par un dispositif d'évaluation de la durée de parcours ou de la phase.

3. Mesure de la température intégrale suivant la revendication 1, caractérisée en ce que le tube capillaire (2) est fermée, de manière réfléchissante, à une extrémité, l'émetteur acoustique et le récepteur acoustique étant disposés simultanément à l'autre extrémité (3) du tube capillaire (2).

4. Mesure de la température intégrale suivant l'une des revendications précédentes, caractérisée en ce que l'extrémité (3) du tube capillaire (2) est couplée, de manière à pouvoir tourner librement, à l'émetteur acoustique ou au récepteur acoustique.

5. Mesure de la température intégrale suivant l'une des revendications précédentes, caractérisée en ce que le tube capillaire (2) est en matériau isolant.

6. Mesure de la température intégrale suivant la revendication 5, caractérisée en ce que du verre est utilisé comme matériau isolant.

7. Mesure de la température intégrale suivant la revendication 6, caractérisée en ce que le tube capillaire (2) est représenté par une fibre de verre dont le diamètre extérieur est de 0,5 mm environ et dont le diamètre intérieur est de 0,3 mm environ.

8. Mesure de la température intégrale suivant l'une des revendications précédentes, caractérisée en ce que le l'envoi du son ou des ultrasons dans le tube capillaire (2), s'effectue, jusqu'à' l'entrée dans une zone à mesurer, dans un corps solide.

# FIG 1

# FIG 2